# EUROPÄISCHE PATENTANMELDUNG

(11) **EP 3 738 812 A1**
(43) Veröffentlichungstag der Anmeldung: **18.11.2020**
(21) Anmeldenummer: 20173798.8
(22) Anmeldetag: 11.05.2020
(51) Int. Cl.: B60K 15/05

(54) **VERSCHLUSSMODUL MIT EINER KLAPPE ZUM SCHLIESSEN EINES BETANKUNGSBEREICHES EINES FAHRZEUGS, INSBESONDERE EINES ELEKTROFAHRZEUGS**

(30) Priorität: 15.05.2019 IT 201900006855
(71) Anmelder: AUTOTEST SUEDTIROL SRL, 39045 Fortezza (BZ) (IT)
(72) Erfinder: Campestrini, Klaus, 39045 Fortezza (BZ) (IT); Oberhauser, Michael, 39045 Fortezza (BZ) (IT)
(74) Vertreter: Ausserer, Anton

(57) **Zusammenfassung**

Die Erfindung betrifft ein Modul (100) zum Schließen eines Betankungsbereiches eines Elektrofahrzeuges,
umfassend eine Aussparung (102), in der ein über die Aussparung zugänglicher Betankungsbereich (107) angeordnet ist,
umfassend eine schwenkbar mit der Aussparung (102) verbundene Klappenausgestaltung (101), wobei die Klappenausgestaltung (101) ein Scharnier (103) und eine erste mit dem Scharnier (103) verbundene Platte (104) und eine zweite an der ersten Platte (104) gekuppelte äußere Platte (106).

Erfindungsgemäß ist die zweite äußere Platte (106) eine Abmessung gleich oder größer gegenüber der ersten Platte (104) aufweist und eine Dichtung (105) mit der ersten Platte (104) am deren Rand verbunden ist und eine in Richtung der äußeren Platte (106) gewölbte Form aufweist und der obere Außenteil (105a) der Dichtung (105) mit der zweiten äußeren Platte (106) in Berührung steht, sobald die Klappenausgestaltung geschlossen ist.

## Beschreibung

Die vorliegende Erfindung bezieht sich auf einen Verschlussmodul mit einer Klappe zum Schließen eines Betankungsbereiches eines Fahrzeugs, insbesondere Elektrofahrzeugs gemäß dem Oberbegriff des Patentanspruchs 1.

### Technisches Gebiet

Die vorliegende Erfindung bezieht sich auf einen Verschlussmodul mit einer Klappe zum Schließen eines Betankungsbereiches eines Fahrzeugs, zum Beispiel für die Betankung durch elektrische Strom eines innerhalb des Fahrzeugs angeordneten Akkumulators. Der Beladungsbereich ist in einer Nische in der Karosserie eines Kraftfahrzeuges ausgebildet. Dieser der Beladungsbereich muss gereinigt sein und die Anwesenheit von Wasser und/oder Feuchtigkeit muss vermieden werden. Somit ist eine Abdichtung des Beladungs-/Betankungsbereiches nach außen erforderlich.

In der vorliegenden Beschreibung und in den anliegenden Patentansprüchen wird für "im wesentlichen", "et wa" eine Abweichung eines Winkels von +/-5° und einer Länge von +/-5% des angegebenen Gegenstandes oder wenn nicht angegeben von +/- 2 cm verstanden.

### Stand der Technik

Es ist eine Vielzahl von Modulen zur Abdichtung des Betankungsbereiches nach außen bekannt, insbesondere sind Systeme zur Betankung mit Kraftstoff bekannt, wo der Ausschluss von Schutz verlangt wird, um zu vermeiden, dass dieser in das Kraftstoffbetankungsrohr Eintritt.

Aus der US 8, 162, 375 ist eine Einheit für die Betankung eines Fahrzeuges durch die Karosserie bekannt, die eine Aussparung umfasst, durch welche ein Betankungsrohr und eine Klappeneinheit zugänglich sind, die gegenüber der Aufnahme geöffnet und geschlossen werden kann. Die Ausbildung der Klappe umfasst ein Scharnier und eine Zierplatte. Das Scharnier umfasst eine Dichtung, die in einem Sitz der Aussparung aufgenommen wird, sobald die Klappeneinheit geschlossen ist.

Die US 8,162,375 beschreibt, dass die Dichtung zwischen dem Scharnier und der Aussparung zwischengeschaltet ist. In dieser Ausbildung teilen sich zahlreiche Probleme. Die Dichtung dichtet den Innenbereich mit der Innenplatte ab, die am Scharnier angeordnet ist, jedoch einen Spalt zwischen der Zierplatte und der Dichtung und einen Zwischenraum bildet, in welchem sich Wasser ansammeln kann, das dann während der Öffnung innerhalb der Aussparung abfließt, wo sich der Beladungsbereich befindet. Das Wasser kann zudem zwischen der Tragplatte und der Zierplatte eindringen. Dies kann Probleme beim Gefrieren schaffen, da es die Ablösung oder Beschädigung der Zierplatte mit den an der Karosserie sichtbaren Schäden verursachen konnte.

Die WO 2015067631 beschreibt einen Modul für ein Kraftfahrzeug, umfassend ein wannenförmiges Gehäuse, das in einem Kraftfahrzeug, insbesondere in die Karosserie eines Kraftfahrzeuges eingebracht werden kann. Dieser Modul weist eine besondere Ausbildung der Dichtung der Art auf, dass ein Fluid, insbesondere von außen eindringendes Wasser abgelenkt und in vorgesehene Kanäle überführt werden kann, die das Fluid dann vom neuen außerhalb der Wanne für dessen Abschluss leiten.

Auch dieses System weist das Problem der Anwesenheit von Flüssigkeit zwischen äußeren Zierplatte und der vom Scharnier getragenen Platte und diese Flüssigkeit kann Schäden zum Beispiel bei Gefrieren und Ausdehnung verursachen. Die Flüssigkeit wird überdies nach außen auf die Karosserie abgelenkt und somit Reste mit sich bringt und die Außenkarosserie verschmutzt.

Die FR 28364427 beschreibt eine Klappe des Deckels des Benzineinlaufstutzens für einen Benzintank für Kraftfahrzeuge, die an einer Innenverkleidungsplatte eine Innenfläche mit Scharnieren zur Verbindung mit dem Fahrzeug aufweist. Die Fläche der Außenverkleidung erhält eine Verkleidungsplatte. Eine Elastomerdichtung ist über einen doppelten Spritzguss auf mindestens einem Abschnitt des Bekleidungsumfanges geformt. Die Patentansprüche beinhalten eine Methode zur Ausführung der Benzineinfülldichtung

Die in dieser Veröffentlichung beschriebene Dichtung weist keine Außenlast auf der Dichtung auf, gewährleistet somit nicht einen ausreichenden und dichten Verschluss, der für elektrische Kraftfahrzeuge verlangt wird. Ein, eine Druck auf die Dichtung gewährleistender Verschluss muss im inneren eine Entlastung des Drucks nach außen sicherstellen, ansonsten besteht das Risiko der Beschädigung der Dichtung, da innere Flüssigkeiten unter Einfluss von Sonne und ähnlichem und zudem kann sich innerhalb des/der Betankungsraum/Nische Kondenswasser bilden und dies ist insbesondere risikoreich bei der Beladung mit elektrischem Strom. Die Veröffentlichung der nicht die Verwendung einer vorgegebenen Kraft auf die Dichtung, weshalb in der Veröffentlichung eine zweite Dichtung vorgesehen ist, um das Fluid abzusperren, über auch diese erlaubt nicht eine Vorspannung auf die Dichtung auszuüben.

### Kurze Beschreibung der Erfindung

Die Aufgabe der vorliegenden Erfindung ist die Ausführung eines Moduls, umfassend eine Klappe zum Verschließen eines Kraftfahrzeugbetankungsbereiches, insbesondere eines Elektrofahrzeugs, die im Stande ist, den Wasserstrom im Beladungsbereich zu vermeiden und das anwesende Wasser abzuleiten und eine durch auf die Dichtung der Art zu gewährleisten, dass eine für Elektrofahrzeuge in diesem Beladungsbereich erforderliche Abdichtung sicherzustellen.

Diese Aufgabe wird durch einen Modul gemäß dem kennzeichnenden Teil des Patentanspruchs 1 gelöst.

Es wird daher ein Modul zum Schließen eines Betankungsbereiches eines Elektrofahrzeuges vorgeschlagen,
umfassend eine Aussparung, in der ein über die Aussparung zugänglicher Betankungsbereich angeordnet ist,
umfassend eine schwenkbar mit der Aussparung verbundene Klappenausgestaltung, wobei die Klappenausgestaltung ein Scharnier und eine erste mit dem Scharnier verbundene Platte und eine zweite an der ersten Platte gekuppelte äußere Platte, und wobei die zweite äußere Platte eine Abmessung gleich oder größer gegenüber der ersten Platte aufweist und wobei die Dichtung mit der ersten Platte am deren Rand verbunden ist und eine nach außen gewölbte Form aufweist und wobei der obere Außenteil der Dichtung mit der zweiten äußeren Platte in Berührung steht, sobald die Klappenausgestaltung geschlossen ist. Der erfindungsgemäße Modul wird bevorzugter Weise in Kunststoff ausgeführt.

Diese nach außen, d.h. in Richtung der zweiten Platte, gewölbte Form, erlaubt, dass die zweite Platte die Dichtung mit einem Druck belastet und somit eine Abdichtung gewährleistet.

Über die Wölbung gelingt es die Kraft der zweiten Platte auf die Dichtung einzustellen.

Vorteilhafter Weise weist die innere Aussparung eine Öffnung auf, in der die Verbindung in Richtung des Akkumulators oder ähnlichem für die Betankung des Kraftfahrzeuges eingebracht wird. Vorteilhafter Weise weißt die innere Aussparung eine Wasserabflussöffnung auf, die im Wesentlichen im tiefsten Innenbereich der Aussparung angeordnet ist und unmittelbar mit einem Abflusskanal verbunden ist, der das Wasser innerhalb der Karosserie in Richtung des Austritts innerhalb des Fahrzeugs leitet.

Im Zwischenraum zwischen der ersten inneren Platte und der zweiten äußeren Zierplatte sind vorteilhafter Weise auf der inneren Platte eine Reihe von Wandungen angeordnet, die ein Flusssystem bilden, welches das im Zwischenraum zwischen den beiden Platten in einem vorgegebenen Bereich des Zwischenraums anwesende Wasser lenkt. Dieser vorgegebene Bereich befindet sich vorteilhafter Weise im, im Wesentlichen unteren Hohlbereich zwischen den beiden Platten, wo eine Öffnung zu der inneren Aussparung angeordnet ist. Diese Öffnung ist unterhalb des Betankungsbereiches und bevorzugter Weise leicht oberhalb der Öffnung für des oben beschriebenen Wasseraustrittes angeordnet. Auf diese Art und Weise eine eventuelle Anwesenheit von Wasser zwischen den beiden Platten durch die beiden Öffnungen nach außen des Fahrzeuges nicht seitlich der Karosserie, sondern unterhalb des Fahrzeuges unter Vermeidung von Resten auf der Karosserie abfließen gelassen.

Mit der vorliegenden Ausbildung werden zudem Überdrücke vermieden, die sich bei hermetischer Abdichtung über die beschriebene Dichtung bilden konnten.

Vorteilhafter Weise wird die innere Platte zusammen mit dem Arm, an dem sie an der Aussparung mit der Dichtung schwenkbar verbunden ist, in einer einzigen Spritzgussform mit zwei verschiedenen Kunststoffarten ausgeführt.

Die Dichtung ist zur äußeren Zierplatte gewölbt wenn die Klappe offen ist.

Wird die Klappe geschlossen, so drückt die äußere Platte die Dichtung gegen die Aussparung/das Fahrzeug und bildet auf diese Art und Weise eine hermetische Abdichtung.

Insbesondere wird der Verschluss durch schnappartiges Schließen der Klappe sichergestellt. Auf diese Art und Weise wird der durch die Klappe erzeugte Druck vorgegeben.

Der Verschlussmechanismus kann auch ein Klemmelement aufweisen, insbesondere eine elektronische Klemmung, über die der Zugang zum Aufladungsbereich nur erlaubt wird wenn die Fahrzeugtüren entriegelt sind.

Weitere Merkmalen und Einzelheiten der Erfindung gehen aus den Patentansprüchen und aus der folgenden Beschreibung einer bevorzugten, nicht begrenzenden, in den anliegenden Zeichnungen dargestellten Ausführungsform hervor. Es zeigen:
Figur 1 eine perspektivische Ansicht eines erfindungsgemäßen Moduls,

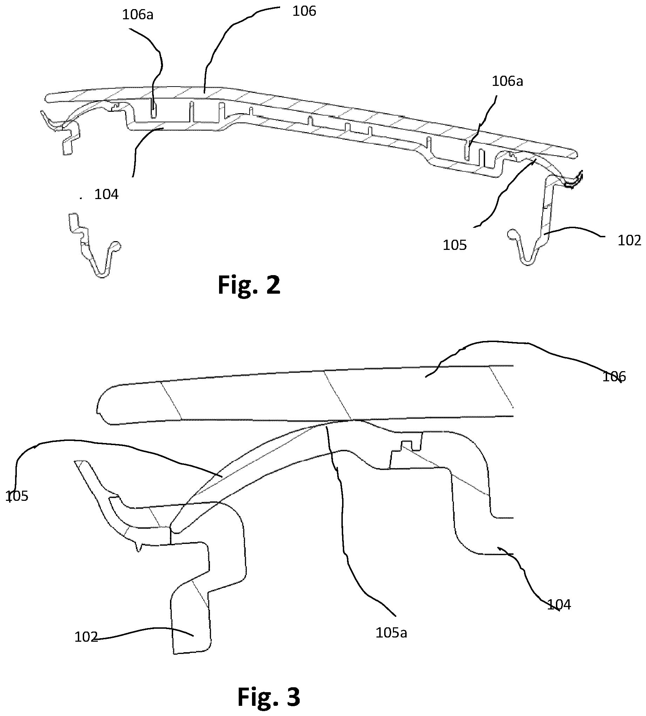

Figur 2 einen Schnitt eines erfindungsgemäßen Moduls,
Figur 3 eine Vergrößerung der Figur 2,

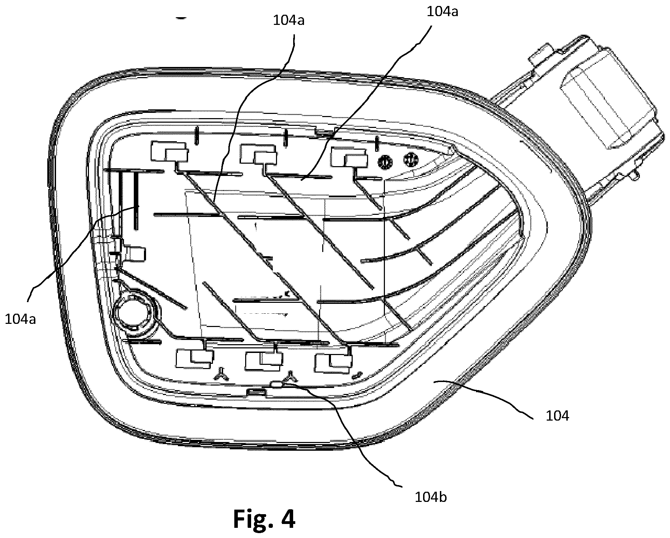

Figur 4 eine Stirnansicht eines erfindungsgemäßen Moduls ohne äußere Platte, und

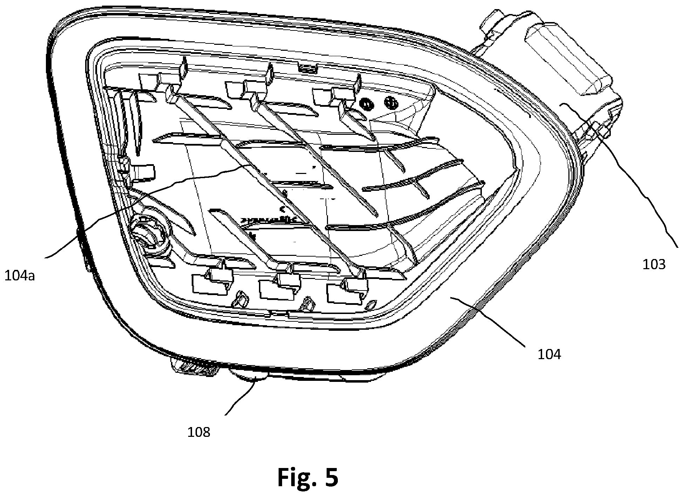

Figur 5 eine perspektivische Basis eines erfindungsgemäßen Moduls ohne äußere Platte.

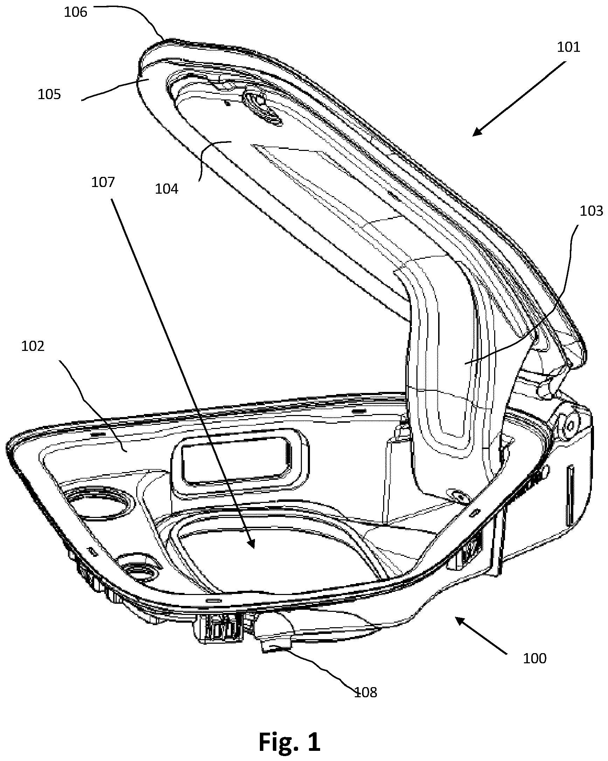

In der Figur 1 wird mit der Bezugsziffer 100 Modul zum Schließen eines Betankungsbereiches eines Elektrofahrzeugs angegeben.

Dieser Modul umfasst eine Aussparung 102, in der ein über die Aussparung 102 zugänglicher Betankungsbereich 107 angeordnet ist. In diesem Betankungsbereich 107 kann ein elektrischer Anschluss zur Speisung des Akkumulators/der Batterie eines elektrischen Fahrzeugs angeordnet sein.
101
Eine Klappenausgestaltung 101 ist mit der Aussparung 102 schwenkbar verbunden. Bevorzugter Weise ist die Klappenausgestaltung versenkbar in der Aussparung 102 aufgenommen.

Die Klappenausgestaltung 101 umfasst ein Scharnier 103 und eine erste mit dem Scharnier verbundene Platte 104 und eine zweite mit der ersten Platte 104 verbundene äußere Platte 106. Die zweite äußere Platte 106 weist eine Abmessung gleich oder größer als die erste Platte 104 auf. Eine Dichtung 105 ist mit der ersten Platte 104 am deren Rand verbunden. Die Kupplung der Dichtung 105 kann zum Beispiel über eine mechanische Kupplung, d.h. durch Einstecken ausgeführt werden oder in einer bevorzugten Ausführungsform kann die ersten Platte 104 durch Spritzgießen oder gießen von zwei Kunststoffen zusammen mit der Dichtung 105 gebildet werden. Vorteilhafter Weise ist auch der Scharnierarm mit der Platte 104 und der Dichtung 105 durch Spritzgießen oder gießen von mehreren Kunststoffen geformt.

Die Dichtung 105 weist eine gewölbte Form nach außen auf und der an oberer Außenteil ist mit der zweiten äußeren Platte 106 in Berührung. Sobald sich die Klappe 101 in Verschlussstellung befindet, drückt die äußere Platte 106 gegen die Dichtung 105 und auf diese Art und Weise wird eine Belastung auf der Dichtung 105 sichergestellt und es wird eine Abdichtung zwischen der Dichtung, den Platten und der Außenkarosserie des Fahrzeuges und/oder der im Fahrzeug angeordneten Aussparung 102 gewährleistet. Mit dieser Ausbildung kann der Klappenverschluss eine Abdichtung gemäß der Norm IP54 gewährleisten.

In einer bevorzugten Ausführungsform befindet sich die äußere Platte 106 auch Berührung mit der Dichtung 105 bei offener Stellung der Klappe.

Vorteilhafterweise sind zwischen den beiden Platten 104 und 106 Wandungen 104a und 106a angeordnet. Diese Wandungen sind der Art angeordnet dass Kanäle für den Abfluss des Wassers, eventuell von Kondenswasser abfließen zu lassen, das sich zwischen den Platten bilden kann, und leiten dieses Wasser zum Abfließen Belichtung einer vorbestimmten Stellung zwischen den beiden Platten 104 und 106. Vorteilhafter Weise können die Wandungen 104a, 106a Mittel für ein gegenseitiges Einhaken der Art aufweisen, dass eine bessere Abdichtung zwischen den beiden Platten 104 und 106 sichergestellt wird. Vorteilhafter Weise ist die vorbestimmte Abflussstelle im Wesentlichen im unteren Hohlbereich zwischen den beiden Platten 104 und 106 angeordnet. Bevorzugter Weise ist in diesem unteren Bereich eine Öffnung 104b in der inneren Platte 104 anwesend. Diese Öffnung 104b erlaubt den Abfluss des Wassers innerhalb der Aussparung 102 des erfindungsgemäßen Moduls 100. Im Bereich der Öffnung 104b in der Aussparung 102 ist ein Abflusskanal 108 vorgesehen. Dieser Abflusskanal 108 ist unterhalb des Betankungsbereichs 107 angeordnet und bevorzugter Weise leicht unterhalb der Öffnung für den Wasserabfluss 104b.

Dieser Abflusskanal 108 lässt das Fluid durch ein Rohr oder ähnliches innerhalb des Fahrzeuges in Richtung der unteren Oberfläche des Fahrzeuges fließen, wobei somit gewährleistet wird, dass der Abfluss unmittelbar auf dem Asphalt und/oder auf der Straße erfolgt und wobei das Abflusswasser nicht auf der Außenfläche des Fahrzeuges, insbesondere auf der Außenkarosserie des Fahrzeuges aufläuft. Auf diese Weise wird vermieden, dass die Außenkarosserie des Fahrzeugs verschmutzt wird oder dann Reste des Abschlusswassers aufweist.

Auch vorteilhafter Weise kann Füllstutzen ein System angeordnet sein, dass nur den Fluss des Fluid in einer Richtung einer und/oder nicht den Zugang vom außen über den Füllstutzen in Aussparung 102 erlaubt. Dieses System kann zum Beispiel ein in eine Richtung laufendes Ventil, ein Filter oder ein älteres System sein.

Auf diese Weise wird vermieden, dass zum Beispiel Insekten oder andere Tierchen in das Rohr hinein kommen und Wasserabfluss versperren.

Es ist schließlich klar, dass am hier beschriebenen Verschlussmodul Zusätze, Abänderungen oder naheliegende Varianten vorgenommen werden können ohne den durch die beiliegenden Patentansprüche festgelegten Schutzbereich zu verlassen.

### Aufstellung der Bezugsziffern

- 100: Verschlussmodul
- 101: Klappe
- 102: Aussparung
- 103: Scharnier
- 104: innere Platte
- 104a: Wandung
- 104b: Öffnung
- 105: Dichtung
- 105a: oberer Außenteil (105a) der Dichtung
- 106: äußere Platte
- 106a: Wandung
- 107: Betankungsbereich
- 108: Abflusskanal

## Patentansprüche

1. Modul (100) zum Schließen eines Betankungsbereiches eines Elektrofahrzeuges, umfassend eine Aussparung (102), in der ein über die Aussparung zugänglicher Betankungsbereich (107) angeordnet ist, umfassend eine schwenkbar mit der Aussparung (102) verbundene Klappenausgestaltung (101), wobei die Klappenausgestaltung (101) ein Scharnier (103) und eine erste mit dem Scharnier (103) verbundene Platte (104) und eine zweite an der ersten Platte (104) gekuppelte äußere Platte (106), **dadurch gekennzeichnet, dass** die zweite äußere Platte (106) eine Abmessung gleich oder größer gegenüber der ersten Platte (104) aufweist und eine Dichtung (105) mit der ersten Platte (104) am deren Rand verbunden ist und eine in Richtung der äußeren Platte (106) gewölbte Form aufweist und der obere Außenteil (105a) der Dichtung (105) mit der zweiten äußeren Platte (106) in Berührung steht, sobald die Klappenausgestaltung (101) geschlossen ist.

2. Modul (100) zum Schließen eines Betankungsbereiches nach Anspruch 1, **dadurch gekennzeichnet, dass** die Aussparung (102) einen Abfluss (108) für den Abfluss des Wassers aus dem Betankungsbereich (107) aufweist.

3. Modul (100) zum Schließen eines Betankungsbereiches nach einem der vorstehenden Ansprüche, **dadurch gekennzeichnet, dass** die innere Platte (104) eine Öffnung (104b) in Richtung des Betankungsbereichs für den Abfluss des Wassers aufweist.

4. Modul (100) zum Schließen eines Betankungsbereiches nach einem der vorstehenden Ansprüche, **dadurch gekennzeichnet, dass** die innere Platte (104) Wandungen (104a) zur Bildung von Wasserabflusskanälen aufweist.

5. Modul (100) zum Schließen eines Betankungsbereiches nach einem der vorstehenden Ansprüche, **dadurch gekennzeichnet, dass** die innere Platte (104) und die Dichtung (105) mittels Spritzguss oder Guss mit mindestens zwei verschiedenen Kunststoffen zugleich gebildet sind.
